Europäisches Patentamt

European Patent Office

Office européen des brevets

(11) Publication number: **0 501 487 A2**

# EUROPEAN PATENT APPLICATION

(21) Application number: **92103382.5**

(22) Date of filing: **27.02.92**

(51) Int. Cl.5: **H04N 1/40**

(30) Priority: **27.02.91 JP 55912/91**

(43) Date of publication of application:
**02.09.92 Bulletin 92/36**

(84) Designated Contracting States:
**DE FR GB**

(71) Applicant: **SEIKO EPSON CORPORATION**
**4-1, Nishishinjuku 2-chome**
**Shinjuku-ku Tokyo(JP)**

(72) Inventor: **Kobayashi, Takao**
**c/o Seiko Epson Corporation, 3-5, Owa**
**3-chome**
**Suwa-shi, Nagano(JP)**

(74) Representative: **Diehl, Hermann Dr. et al**
**Diehl & Glaeser, Hiltl & Partner**
**Flüggenstrasse 13**
**W-8000 München 19(DE)**

(54) Thermal transfer image forming apparatus.

(57) A thermal transfer image forming apparatus including a printhead (6) having a plurality of heating resistor elements (14) arranged in a row, wherein a recording sheet (1) and an ink sheet (9) are forwarded at a predetermined pitch, image data forming inputted image data is extracted at a certain interval, and the heating resistor elements (14) of the printhead (6) are supplied with electric energy corresponding to a density specified by the image data so as to correspond to the extracting interval. The image data is extracted at an interval amounting at least to a single pixel out of the image data fed from an external device in the main scanning direction so as to prevent thermal interference with the neighboring heating resistor elements (14), so that the heating resistor elements (14) are operated accurately with respect to such electric energy as to form a dot larger than the dot size specified by the highest density of the inputted image data. As a result, density can be expressed in a high number of gradations. This permits sufficient tone expression and color reproduction even if the area of a sampling region is reduced, hence reducing the dither processing steps to thereby decrease image data processing time and preventing generation of texture noise.

FIG. 1

The invention relates to a thermal transfer image forming apparatus.

A thermal transfer printer includes an ink sheet or ink ribbon which is prepared by using coating wax mixed with a pigment on a high molecular film, and a printhead having small heating resistor elements integrated on a substrate. The heating resistor elements of the printhead are energized to melt the wax in the ink by heating small spots thereon to a temperature greater than an ink melting temperature to thereby transfer the ink onto a recording sheet.

Such a thermal transfer printer allows each heating resistor element, i.e., a dot forming element, to be made sufficiently small that it can be extensively used in the field of full-color printing for which dots must be formed with a high density.

It is noted that full-color printing requires that each color be reproduced faithfully. However, pigments are usually limited to four colors, i.e., the three primary colors (yellow, magenta, and cyan) and black. To express color tones under such limitations, it is necessary that the density of a dot to be printed in each primary color be arbitrarily adjusted by the heating resistor elements. As a technique to respond to such a requirement, an image recording apparatus has been proposed, which apparatus operates in the following manner. The electric energy supplied to the heating resistor elements on the printhead is controlled to adjust the area that is heated to an ink melting temperature so as to vary the dot size. Additionally, the image data including a plurality of pixels in matrix forms is sampled and the sampled data is subjected to a dither process to thereby produce a print image that is representative to the image data (see Transactions of the Institute of Electronic Information and Communications C-II, vol. J73-c-ii, No. 2, January 1990, pp. 38-45).

However, a 4 × 4 matrix is required as a minimum sampling region, and, in addition, since the sampled data must be subjected to dither processing by applying a threshold matrix consisting of five or six gradations, it takes time to generate print data from the image data, and a net-like image not found in the original image data, or the so called "texture noise," becomes noticeable.

Accordingly, an object of the invention is to provide a thermal transfer image forming apparatus capable not only of producing print data from image data at high speeds, but also of preventing to the extent possible net-like noise patterns from being generated at the time of setting a sampling region.

This object is solved by the thermal transfer image forming apparatus according to one of independent claims 1, 4, 5, and 6. Further advantageous features, aspects and details of the invention are evident from the dependent claims, the description and the drawings. The claims are intended to be understood as a first non-limiting approach of defining the invention in general terms.

The invention provides tone control technology suitably applied to thermal transfer printers in which a plurality of heating resistor elements are arranged in a row on a surface of a substrate and selectively heated in accordance with print data to melt the ink of an ink sheet or an ink ribbon so that dots can be formed on a recording sheet.

The invention preferably is applied to a thermal transfer image forming apparatus, which includes a printhead having a plurality of heating resistor elements arranged in a row, means for forwarding a recording sheet and an ink sheet at a predetermined pitch, means for extracting pixel data that forms inputted image data at a certain interval in digital form, and means for supplying the heating resistor elements with electric energy corresponding to the density specified by the pixel data so as to correspond to the interval.

The image data is extracted from the externally inputted image data by the extracting means at an interval corresponding to at least to a single pixel in the main scanning direction, and the extracted data is outputted to a thermal transfer printhead composed of linearly arranged heating resistor elements extending in the main scanning direction. Accordingly, each of the heating resistor elements to which the image data have been inputted is free from thermal interference with neighboring heating resistor elements and can thereby produce a print dot whose area is proportional to the inputted electric energy even if electric energy for producing a dot whose size is larger than a dot size specified by the highest density of the inputted image data is supplied. As a result, the apparatus of the invention can provide density at more gradations than the conventional apparatus, thereby not only permitting accurate tone expression and color reproduction, but also permitting sufficient tone expression even if the sampling region is reduced to the greatest possible extent, which then contributes to preventing the generation of texture noise attributable to large sampling regions.

Fig. 1 is a sectional view showing a construction of a thermal transfer printing apparatus of the invention;

Fig. 2 is a front view showing an exemplary printhead used in the invention with a coated layer formed on a surface thereof being removed to expose an electrode section;

Fig. 3 is a block diagram showing an exemplary controller of the apparatus shown in Fig. 1;

Fig. 4 is a diagram showing signals from a thermal transfer printhead drive circuit of the same apparatus;

Fig. 5 is a block diagram illustrating functions implemented by a microcomputer which forms the controller;

Figs. 6-I to 6-II' are schematic diagrams showing image data and data to be supplied to the printhead, of which Figs. 6-I and 6-I' shown image data of an odd line and the corresponding data to be supplied to the printhead, respectively, while Figs. 6-II and 6-II' depict image data of an even line and the corresponding data to be supplied to the print head;

Figs. 7(a) and 7(b) are schematic diagrams showing ink melting temperature regions on heating resistor elements forming the printhead, Fig. 7(a) showing a case where a single heating resistor element is turned on with neighboring heating resistor elements being turned off, while Fig. 7(b) showing a case where the neighboring heating resistor elements are turned on;

Fig. 8 is a diagram showing a relationship between the relative input energy and the dot size when data is printed by the apparatus shown in Fig. 1;

Fig. 9 is a diagram schematically showing a region to be printed by the same apparatus;

Figs. 10(a)-I to 10(a)-III are schematic diagrams respectively showing a dot printed by the apparatus of the invention in an enlarged manner, and Figs. 10(b)-I to 10(b)-III are schematic diagrams showing a dot printed by a conventional apparatus in an enlarged manner;

Fig. 11 is a diagram schematically showing another printing mode performed by the apparatus shown in Fig. 1;

Fig. 12 is a block diagram showing a second embodiment of the invention, by way of functions performed by a microcomputer forming a controller;

Fig. 13 is a diagram schematically showing an exemplary sampling of data in the second embodiment;

Fig. 14(a) is a diagram showing a data format of an evaluation data storage unit in the second embodiment, and Fig. 14(b) is a diagram showing exemplary data;

Fig. 15 is a diagram schematically showing image data stored in a line buffer in the second embodiment;

Fig. 16 is a schematic diagram showing exemplary image data stored in a print buffer after being extracted from the image data stored in the line buffer in the second embodiment;

Fig. 17 is a block diagram showing a third embodiment of the invention, illustrated by way of functions performed by a microcomputer forming a controller;

Fig. 18 is a diagram schematically showing exemplary printing image data prepared from input image data in the third embodiment;

Fig. 19 is a block diagram showing a fourth embodiment of the invention, illustrated by way of functions performed by a microcomputer forming a controller;

Fig. 20 is a diagram showing a data sampling mode and the relationship between the sampled data and $\gamma$ conversion in the fourth embodiment;

Figs. 21-27 are diagrams showing an exemplary $\gamma$ conversion characteristic applied to the invention; and

Figs. 28-I to 28-IV are schematic diagrams showing an exemplary distribution of conversion characteristic functions $\gamma$ for a full-color printing utilizing the $\gamma$ conversion characteristics shown in Figs. 26 and 27.

Preferred embodiments of the invention will now be described with reference to the attached drawings.

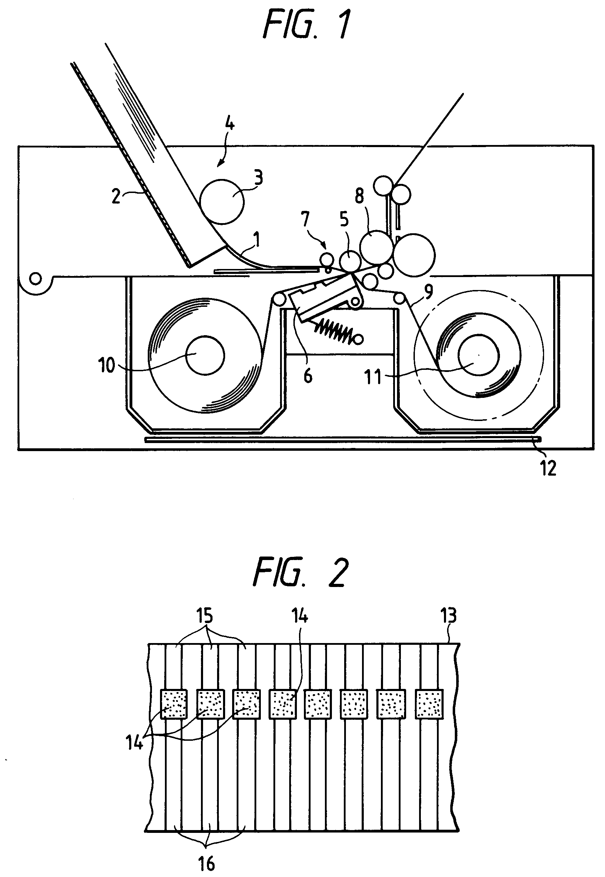

Fig. 1 is a diagram showing an embodiment of a thermal transfer image forming apparatus the invention, which includes a thermal transfer print mechanism and a controller. The thermal transfer print mechanism includes a sheet feed mechanism 4 for conveying a single recording sheet by drawing out the sheet from a stacker 2 with a pickup roller 3, a platen 5 for forwarding the recording sheet 1 and an ink sheet 9 at a predetermined speed, a print mechanism 7 formed of a thermal transfer printhead 6 which is in continual pressure contact with the platen 5 during printing, a forward roller 8 for returning the printed recording sheet to the stacker 2, a stock roller 10 for supplying the ink ribbon 9, and a rewind roller 11. On the bottom of the housing is disposed a circuit board 12 into which a control circuit (to be described later) is assembled.

As shown in Fig. 2, the thermal transfer printhead 6 is constructed so that heating resistor elements 14 are arranged at a predetermined pitch in a row on a surface of a substrate 13 and leads 15, 16 are drawn out in a sheet forwarding direction.

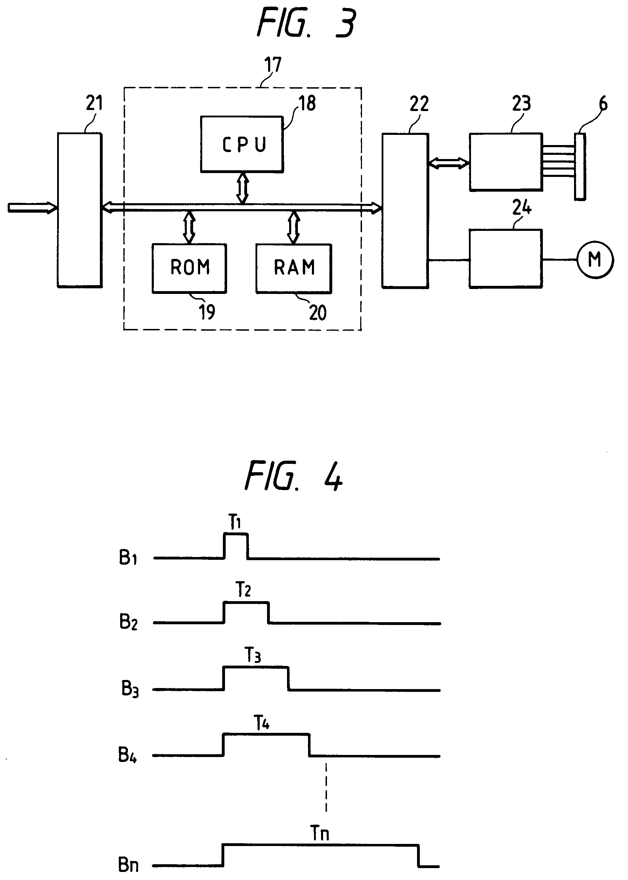

Fig. 3 shows an embodiment of the control circuit. In Fig. 3, reference numeral 17 designates a microcomputer which forms the heart of the controller. The microcomputer 17 includes a CPU (central processing unit) 18, a ROM (read only memory) 19 in which control programs and data processing programs (described later) are stored, and a RAM (random access memory) 20 forming data processing buffers and frame memories. The microcomputer 17 is connected to external devices including a personal computer, a printhead drive circuit 23 and a motor drive circuit 24, through interfaces 21, 22.

The printhead drive circuit 23 is arranged so that each of the heating resistor elements 14 of the thermal transfer printhead 6 is supplied with electric energy corresponding to density data outputted from the interface 22, the electric energy being, for example, pulsed power at times $T_1$, $T_2$, $T_3$, $T_4$, •••, $T_n$ sequentially increased in accordance with density $B_1$, $B_2$, $B_3$, $B_4$, •••, $B_n$, as shown in Fig. 4.

The motor drive circuit 24 outputs a drive pulse to a motor so that the motor can rotate in such a direction and at such a speed as to correspond to an instruction delivered from the interface 22.

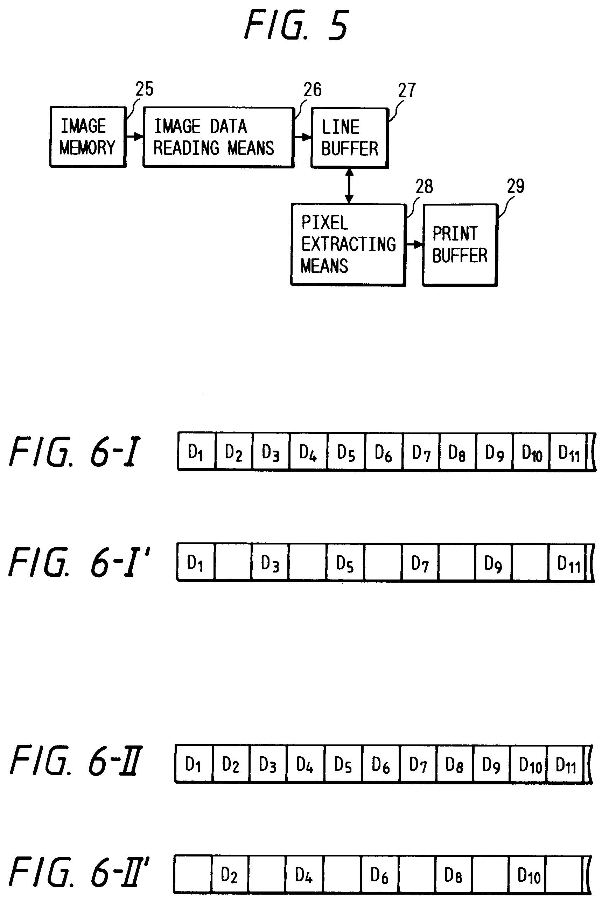

Fig. 5 schematically shows the functions implemented by the microcomputer 17. An image memory 25 stores single-page-long input data. An image data reading unit 26 extracts single-line-long data of a predetermined color and stores the extracted data in a line buffer 27. A pixel extracting circuit 28 extracts every second image data from the image data stored in the line buffer 27 in the main scanning direction and outputs the extracted data to a print buffer 29.

The operation of the thus-constructed apparatus will be described next.

When image data is inputted from an external device such as a personal computer, the microcomputer 17 stores single-page-long image data in the image memory 25, and extracts print data of a first color, *e.g.*, cyan data, among single line-long image data to be printed, and outputs such extracted print data to the line buffer 27. When image data $D_1$, $D_2$, $D_3$, $D_4$, $D_5$, •••, $D_{10}$, $D_{11}$, $D_{12}$ (Fig. 6-I) have been stored in the line buffer 27, the image data are extracted alternately in the main scanning direction. For example, the image data $D_1$, $D_3$, $D_5$, •••, $D_{11}$ (Fig. 6-II) representing odd pixel data are applied to the print buffer 29. The microcomputer 17 outputs density data specific to each of the image data stored in the print buffer 29 to the thermal transfer printhead drive circuit 23 through the interface 22. The thermal transfer printhead drive circuit 23 supplies alternate heating resistor elements 14, *e.g.*, odd ones, with electric energy specified by the density data. In supplying the electric energy, the applied electric energy is proportional to the reciprocal of an extracting rate, and excluded pixel data is added to another pixel data which neighbors such excluded pixel data and which is to be printed.

Accordingly, the odd heating resistor elements 14 to be driven are free from thermal interference with other neighboring heating resistor elements. Therefore, they accurately transfer areas of ink proportional to the supplied electric energy, and the average density over the entire print surface is consistent with the image data.

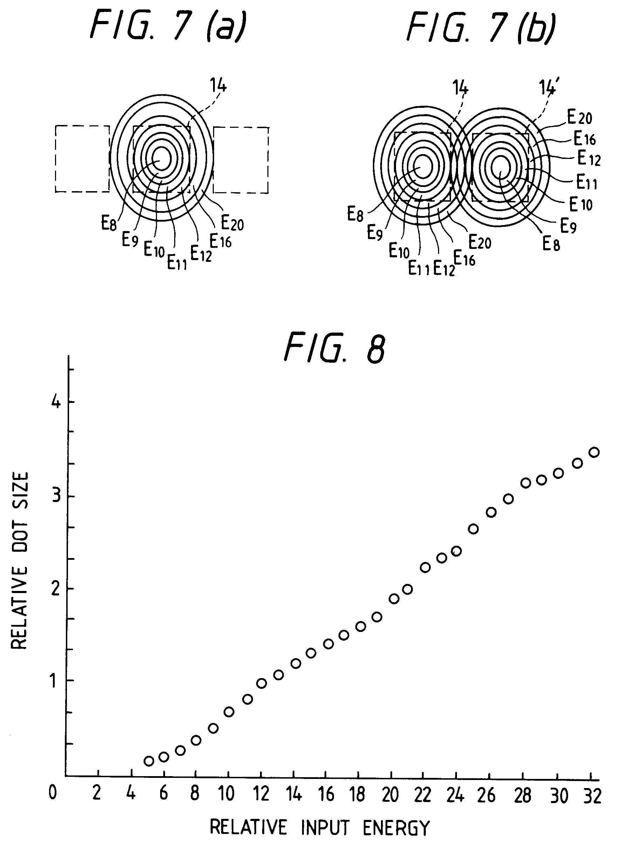

If a single heating resistor element 14 is driven, the heating resistor element is heated so as to form a circular isothermal line with its center being at the highest temperature, since the region in an ink sheet that is heated to an ink melting temperature by the supplied electric energy has a higher degree of heat dissipation at its outer periphery as long as its relative input energy is small due to its periphery being in contact with the environment. As the relative input energy becomes larger, the heated area of the heating resistor element 14 becomes larger than that of the heating resistor element 14, expanding to the neighboring heating resistor elements. As a result, the ink melted area is proportional to the magnitude of electric energy $E_1$, $E_2$, $E_3$, $E_4$, $E_5$, •••, as shown in Fig. 7(a). That is, a dot is formed by expanding the ink melted area in proportion to the relative input energy, even with respect to relative input energy $E_{32}$ which exceeds conventionally used relative input energy $E_{12}$, as shown in Fig. 8.

On the other hand, when two neighboring heating resistor elements 14, 14' are driven simultaneously, heat from both elements interferes with each other on the neighboring side. As a result, as shown in Fig. 7(b), the upper limit of the relative input electric energy that can change the melted area proportionally by overlapping the regions having the ink melting temperature is limited below $E_{12}$, thus saturating the ink melted area with respect to relative input energy $E_{12}$ to $E_{32}$.

As a result, according to the apparatus of the invention, the upper limit of reproducible maximum density is increased, so that the number of tones is increased to allow the density specified by the image data to be accurately expressed, thereby achieving dot formation with tones permitting full-color printing.

When the single line-long data has been printed, the microcomputer 17 outputs a signal equivalent to a single-line spacing to the motor drive circuit 24 and rotates the forward roller 8 to forward both the recording sheet I and the ink sheet by the single line spacing. Accordingly, a new portion of the ink sheet and a nonprinted portion of the recording sheet are provided in the print region on the printhead 6. The image data reading unit 26 causes data corresponding to a next single line $D_1$, $D_2$, $D_3$, $D_4$, $D_5$, •••, $D_{10}$, $D_{11}$, $D_{12}$ to be stored in the buffer from the image memory 25, while the digits that have not been printed in the last printing, *i.e.*, only the even image data $D_2$, $D_4$, ••• $D_{10}$, $D_{12}$, are extracted and stored in the print buffer 29.

These data $D_2$, $D_4$, ••• $D_{10}$, $D_{12}$ are applied to the printhead drive circuit 23 through the interface 22, and electric energy proportional to the density specified by the image data $D_2$, $D_4$, ••• $D_{10}$, $D_{12}$ is supplied to the even heating resistor elements 14. Accordingly, the even heating resistor elements 14, of the printhead 6 are free from thermal interference with the neighboring heating resistor elements. Further, the even heating resistor elements for printing the second line, being at room temperature because of not being driven in printing the first line, are heated above the ink melting temperature over an area that is accurately proportional to the supplied electric energy.

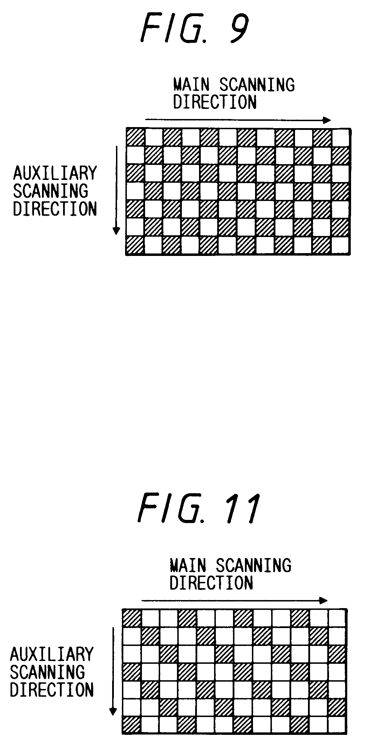

When the second line has been printed, the same process as the first line printing process is performed to print a third line. Since the heating resistor elements to be used in the third line printing have been turned off during the last printing process, they are capable of heating an area that is accurately proportional to the supplied electric energy. Thus, data is processed alternately between the odd and even digits on a line-by-line basis so that the areas indicated by hatching in Fig. 9 are printed as dots.

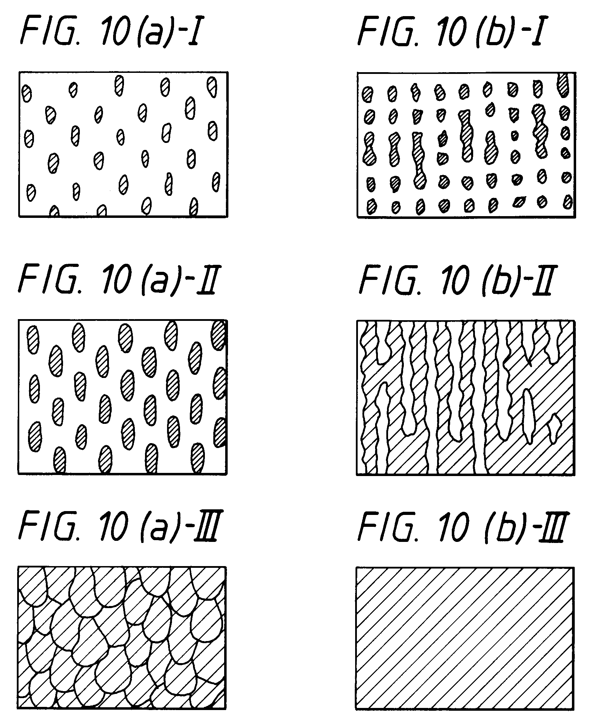

As a result, if the relative input energy is small as shown in Fig. 10(a)-I, small dots leaving sufficient blanks between the neighboring dots can be formed; further, even if such relative energy as to saturate the conventional apparatus is supplied (Fig. 10(a)-II), the dots formed are still independent of one another so as to leave blank spaces therebetween; and if the largest relative energy is inputted (part III of Fig. 10 (a)), dots which are so large as to leave no blank spaces therebetween can be formed irrespective of the fact that alternate heating resistor elements are operated.

In contradistinction thereto, dots formed by the conventional apparatus, as shown in Figs. 10(b)-I to 10(b)-III, become sporadically contiguous if such relative input energy as to not saturate is supplied (Fig. 10(b)-I), and almost all the dots become contiguous when relative input energy that is only one-third the energy required for the apparatus of the invention to form the largest dot has been supplied (Fig. 10(b)-II).

When the printing process has printed the first primary color, the microcomputer 17 causes the printhead 6 to be separated from the platen 5 to form a gap therebetween, causes the forward roller 8 to rotate in reverse to reset a recording sheet at a print start position, and further causes the ink sheet rewind roller 11 to rotate to position a second color ink region at the printhead. Thereafter, printing for the second color is performed, following the same process as the printing process for the first color.

After such a process is repeated for a third color, color-separated dots of each pixel are formed so that a desired color data is printed.

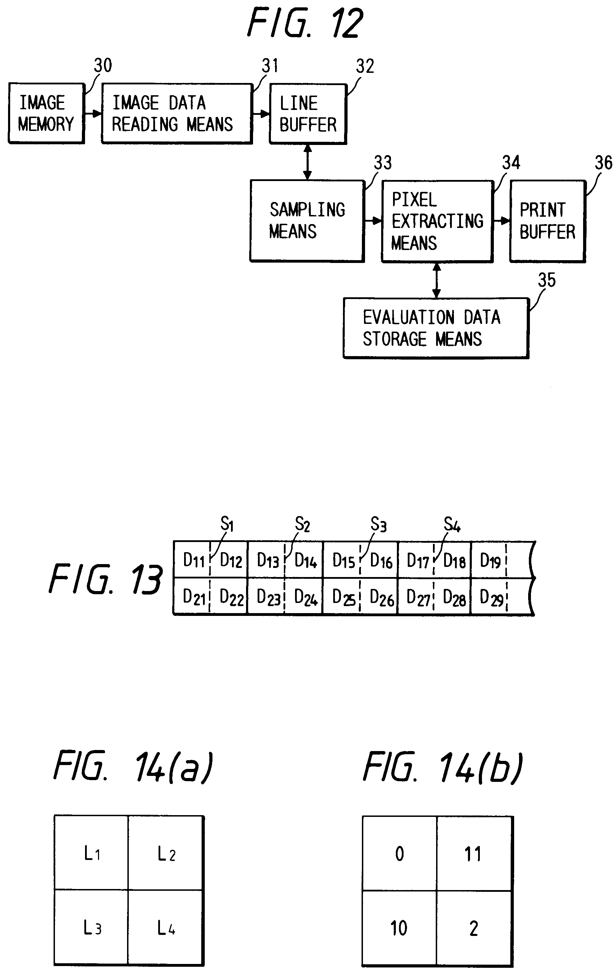

While dots are formed alternately in this embodiment, it is obvious that the same effect can be obtained by forming dots every third digit while sequentially shifting the print region on a line-by-line basis as the regions indicated by hatching in Fig. 11.

Fig. 12 is a diagram showing a second embodiment by way of functions performed by the microcomputer. In Fig. 12, reference numeral 31 designates an image data reading unit, which not only extracts N line(s) (N is an integer greater than 1) from single page-long image data stored in an image memory 30 while moving two line-long image data every N line(s) in this embodiment, but also outputs the extracted data to a line buffer 32. Reference numeral 33 designates a sampling circuit, which samples N-digit-long image data (N is an integer greater than 1) in the main scanning direction from the image data stored in the line buffer 32 (i.e., N × N dots, or regions $S_1$, $S_2$, $S_3$, $S_4$, •••, each consisting of 2 × 2 pixels) and outputs the extracted data to a pixel extracting circuit 34. The pixel extracting circuit 34 compares each of the pixels $L_1$, $L_2$, $L_3$, $L_4$ of a sampling region stored in an evaluation data storage unit 35 (Fig. 13 and Fig. 14(a)) with data stored in the evaluation data storage unit 35 (Fig. 14(b)), each of the data being set as a threshold, such as, for example, "0", the lowest density $a_1$ for the pixel $L_{11}$, "11", the highest density $a_2$ for the pixel $L_2$ which is adjacent to the pixel $L_{11}$ "10", the second highest density $a_3$ for the pixel $L_3$ which is located immediately below the lowest density, and "2", the second lowest density $a_4$ for the pixel $L_4$ which is obliquely below and independent from the pixel $L_1$ contributing to forming a dot, and outputs only the image data exceeding the threshold(s) to a print buffer 36.

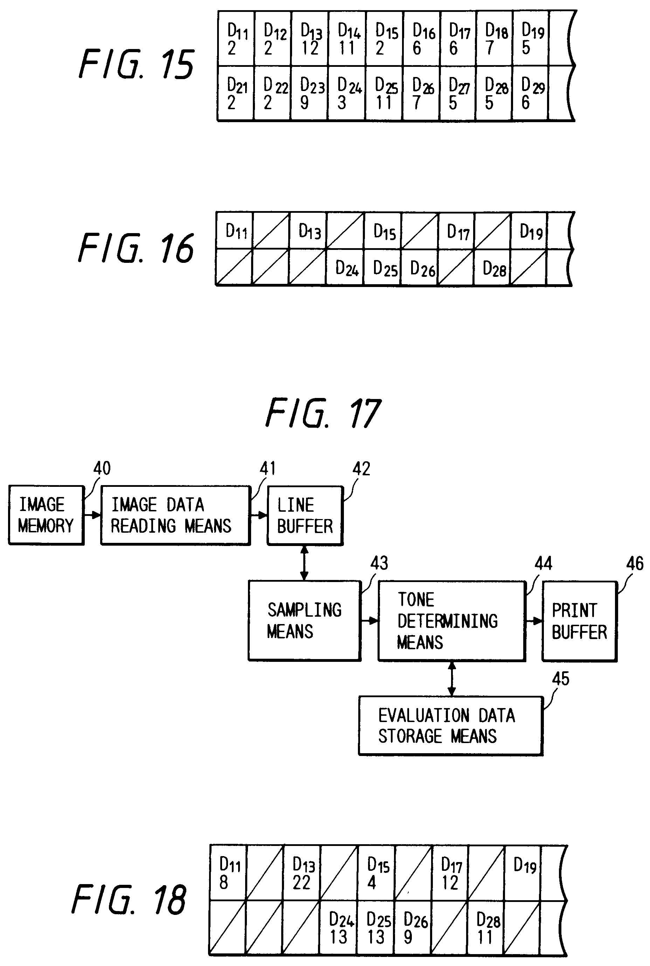

In this embodiment, upon storing single page-long data in the image memory 30 after image data has been applied from an external device such as a personal computer, the image data reading unit 31 reads the first two lines of data and stores the read data in the line buffer 32. Among the read image data, 2 × 2 image data $D_{11}$, $D_{12}$, $D_{21}$, $D_{22}$ in the first sampling region $S_1$ are compared with the thresholds in the evaluation data storage unit 35. For example, if image data having such tones as shown in Fig. 15 are outputted, only the image data $D_{11}$ exceeding the corresponding threshold is delivered to the print buffer 36 with respect to the sampling region $S_1$.

Then, the sampling circuit 33 reads image data $D_{13}$, $D_{14}$, $D_{23}$, $D_{24}$, from the next sampling region $S_2$ and compares them with the thresholds stored in the evaluation data storage unit 35. In this case, since the density values of the image data $D_{13}$, $D_{24}$ exceed the thresholds, only the image data $D_{13}$, $D_{24}$ are applied to the print buffer 36. While sequentially moving the sampling regions, only the image data exceeding the thresholds are outputted to the print buffer 36. As a result, one of the neighboring dots is excluded from the data present on the same line as shown in Fig. 16, thus extracting only the pixels $D_{11}$, $D_{13}$, $D_{15}$, $D_{17}$, $D_{19}$ as well

as substantially alternate pixels $D_{24}$, $D_{25}$, $D_{26}$, $D_{28}$.

Upon completion of extracting the print data from the two line-long image data, the microcomputer 17 feeds the image data stored in the print buffer 36 to the printhead drive circuit 23 through the interface 22. Accordingly, since alternate heating resistor elements of the printhead 6 are driven with respect to the first line as described previously, the heating resistor elements contributing to forming dots can express the tones satisfactorily even for high density image data as described above. Upon completion of printing the first line in this manner, the microcomputer 17 forwards the recording sheet 1 and the ink sheet 9 a single line while driving the pulse motor, and then similarly prints the second line data from the print buffer 36.

Upon completion of printing the two lines of data, the next two lines of data, *e.g.*, the third and fourth lines, are read from the image memory 30, similarly sampled on a 2 × 2 pixel basis, and compared with the thresholds, and only the image data exceeding the corresponding threshold(s) are supplied to the print buffer 36 and then printed.

In this embodiment, by changing the data stored in the evaluation data storage unit, image data to be excluded can be determined in accordance with the density of the image data. Thus, not only can high density dots be reproduced surely, but also it is ensured that the neighboring high density image data will not be omitted, thereby permitting printing that is accurate with respect to the input image data.

While it is the 2 × 2 pixel region that is evaluated in this embodiment, it is obvious that the same effect can be obtained by evaluating a 3 × 3 or more pixel region. It is also obvious that the same effect can be obtained by sampling and evaluating a rectangular matrix N × M (N and M are integers greater than 1).

Further, while the thresholds, which are the evaluation data, are set to "0," "11," "10," and "2" in this embodiment, taking the 2 × 2 evaluation region as an example, the pixel density can be modified to, for example, 1/2, by setting two of the thresholds to, for example, "11," which is a value allowing the highest density to be extracted, and, for example, 1/4, by setting three of the thresholds to "11." In addition, suitable printing conditions can be set in accordance with the original image data and the quality of a recording sheet by variously changing the evaluation data for intermediate density thresholds.

Fig. 17 is a diagram showing a third embodiment indicated by way of functions performed by the microcomputer. In Fig. 17, reference numeral 41 designates an image data reading unit, which extracts N line(s) (N is an integer greater than 1) from single-page-long image data stored in an image memory 40 while moving two-line-long image data every N line(s) in this embodiment, and outputs the extracted data to a line buffer 42. Reference numeral 43 designates a sampling circuit which samples N-digit-long image data (N is an integer greater than 1) in the main scanning direction from the image data stored in the line buffer 42, (*i.e.*, N × N dots, or regions $S_1$, $S_2$, $S_3$, $S_4$, each consisting of 2 × 2 pixels) and outputs the extracted data to a tone determining unit 44. The tone determining unit 44 compares each of the pixels $L_1$, $L_2$, $L_3$, $L_4$ of a sampling region stored in an evaluation data storage unit 45 (Fig. 14(a)) with data stored in the evaluation data storage unit 45 (Fig. 14(b)), each of the data being set as a threshold, such as "0" the lowest density $a_1$ for the pixel $L_1$, "11" the highest density $a_2$ for the pixel $L_2$ which is adjacent to the pixel $L_1$, "10" the second highest density $a_3$ for the pixel $L_3$ which is located immediately below the lowest density, and "2" the second lowest density $a_4$ for the pixel $L_4$ which is obliquely below and independent from the pixel $L_1$ contributing to forming a dot, and extracts only the image data exceeding the corresponding threshold(s), adds the tone(s) of the data equal to or below the threshold(s) to the data exceeding the threshold(s), and outputs the sum to a print buffer 46.

In this embodiment, upon storing single page-long data in the image memory 40 after image data has been applied from an external device such as a personal computer, the image data reading unit 41 reads the first two lines of data and stores the read data in the line buffer 42. Among the read image data, 2 × 2 image data $D_{11}$, $D_{12}$, $D_{21}$, $D_{22}$ in the first sampling region $S_1$ are compared with the thresholds in the evaluation data storage unit 45. For example, if image data having such tones as shown in Fig. 15 are outputted, only the image data $D_{11}$ exceeding the corresponding threshold is delivered to the print buffer 46 with respect to the sampling region $S_1$, and the tone data "2", "2", "2", of the other data $D_{12}$, $D_{21}$, $D_{22}$ are added to the density data "2" of the data $D_1$ to be printed, so that the density data "8" is eventually outputted to the print buffer 46 with respect to the data $D_{11}$.

Then, the sampling circuit 43 reads data $D_{13}$, $D_{14}$, $D_{23}$, $D_{24}$ from a next sampling region $S_2$, and similarly compares them with the thresholds stored in the evaluation data storage unit. In this case, since the density values of the data $D_{13}$, $D_{24}$ exceed the corresponding thresholds, the density values "11," "9" of the pixels $D_{14}$, $D_{23}$ which are equal to or below the corresponding thresholds are added to the density values "12", "3" of the pixels $D_{13}$, $D_{24}$, in order not to produce error of the density value in the 2 X 2 matrix area of the pixels D13, D14, D23 and D24. Consequently, the density value of D13 and D24 is corrected to the value of "22" and "13", respectively, and the corrected data are applied to the print buffer 46. Then, the sampling unit 43 reads the data $D_{15}$, $D_{16}$, $D_{25}$, $D_{26}$ from the next sampling region $S_3$ and compares the read data with the thresholds in the evaluation data storage unit 45 in accordance with the same process. In this case, since the density values of the data $D_{15}$, $D_{25}$, $D_{26}$ exceed the corresponding thresholds, the density value "6" of the pixel $D_{16}$ which is smaller than the threshold is added to the density data "2," "11," and "7" of the density data of the pixels $D_{15}$, $D_{25}$, $D_{26}$, and the density values are so corrected as to be a density "4" for the data $D_{15}$, a density "13" for the data $D_{25}$, and a density "9" for the data $D_{26}$, and the corrected density data are outputted to the print buffer 46.

While sequentially moving the sampling regions, the density data of the data equal to or less than the threshold(s) are added to those of the image data exceeding the threshold(s) and outputted to the print buffer 46. As a result, one of the neighboring dots are excluded from the data present on the same line as shown in Fig. 18, thus extracting only the pixel $D_{11}$, $D_{13}$, $D_{15}$, $D_{17}$, $D_{19}$, as well as substantially alternate pixels $D_{24}$, $D_{25}$, $D_{26}$, $D_{28}$.

Upon completion of extracting the print data from the two line-long image data, the microcomputer 17 feeds the image data stored in the print buffer 36 to the printhead drive circuit 23 through the interface 22. Accordingly, since alternate heating resistor elements of the printhead 6 are driven with respect to the first line as described previously, the heating resistor elements contributing to forming dots can reproduce the density of even a high density image data accurately as described above, thus permitting a satisfactory overall tone representation. Upon completion of printing the first line in this manner, the microcomputer 17 forwards the recording sheet 1 and the ink sheet 9 a single line while driving the pulse motor, and then similarly prints the second line data from the print buffer 46.

Upon completion of printing the two lines of data, the next two lines of data, for example, the third and fourth lines, are read from the image memory 40, similarly sampled on a 2 × 2 pixel basis, and compared with the thresholds, and only the image data exceeding the corresponding threshold(s) are supplied to the print buffer 46 and then printed.

This embodiment not only determines pixel(s) to be excluded in accordance with the density of the pixels forming a portion of the image data, but also reflects the density of the pixel(s) to be excluded upon the density of the pixels to be printed, so that high density dots can be formed under satisfactory tone expression. In addition, by preventing neighboring high density pixels from being omitted, this embodiment allows printing to be more representative of the input image data.

While it is the 2 × 2 pixel region that is evaluated in this embodiment, it is obvious that the same effect can be obtained by evaluating a 3 × 3 or more pixel region. It is also obvious that the same effect can be obtained by sampling and evaluating a rectangular matrix N × M (N and M are integers greater than 1).

Further, while the density of image data not contributing to forming a dot is uniformly distributed to the density of image data contributing to forming a dot in this embodiment, it may be so arranged that the density data are distributed in inverse proportion to the evaluation data thresholds.

Further, multiplication of the extracted data substantially by the reciprocal of an extracting rate every matrix or every line contributes to preventing a density reduction in the entire image attributable to image data exclusion.

While image data at a predetermined position is extracted from the sampled image data in the above embodiments, the same effect can be obtained by converting the density of a sampled dot in accordance with a predetermined characteristic curve as indicated below.

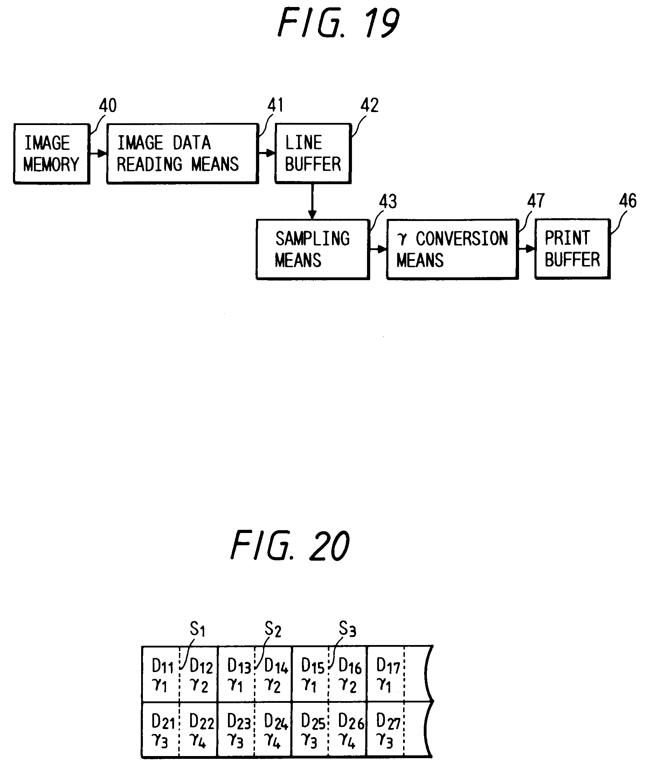

Fig. 19 shows an embodiment in which the tone determining unit 44 and the evaluation data storage unit 45 in the third embodiment are replaced with a γ conversion unit. The process of sampling the image data to be evaluated by image memory 40, the image data reading unit 41, the line buffer 42, and the sampling circuit 43 is the same as described above. The γ conversion unit 47 determines a single conversion characteristic with respect to the position of dot data within a sampled region, in such a manner that sampled data, *e.g.* ($D_{11}$, $D_{12}$, $D_{21}$, $D_{22}$) in the sampled region $S_1$ consisting of 2 × 2 pixels are converted into print data by a conversion characteristic function $\gamma_1$, a conversion characteristic function $\gamma_2$, a conversion characteristic function $\gamma_3$, and a conversion characteristic function $\gamma_4$, respectively, the data $D_{13}$, $D_{14}$, $D_{23}$, $D_{24}$ in the region $S_2$ are converted into print data by the conversion characteristic function $\gamma_1$, the conversion characteristic function $\gamma_2$, the conversion characteristic function $\gamma_3$, and the conversion characteristic function $\gamma_4$, respectively, etc.

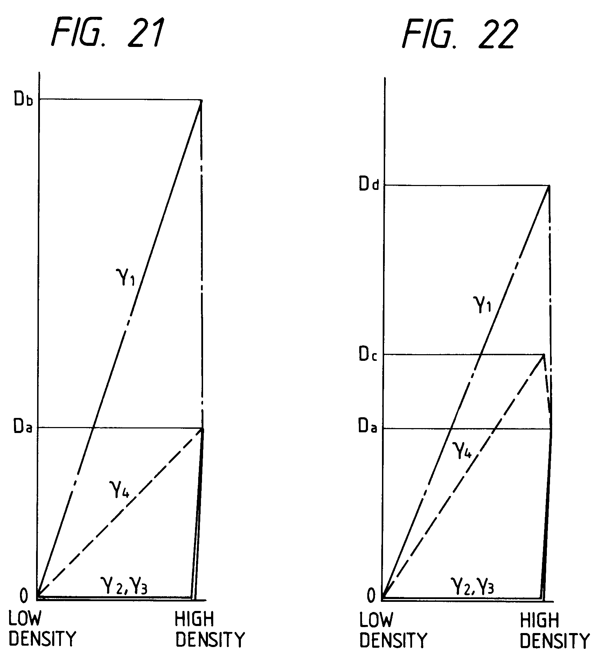

Fig. 21 shows an exemplary γ characteristic set in the conversion unit 47. The conversion characteristic function $\gamma_1$ has a conversion characteristic in which an image data value is changed so as to be substantially linear with conversion print data Db corresponding to sufficiently high electric energy as a maximum, and in which, if the image data value is the maximum allowed by the heating resistor element, the image data is converted into print data $D_a$ that is the same as the image data value. The conversion characteristic function $\gamma_4$ has a substantially linear conversion characteristic with $D_a$ as a maximum. Further, each of the conversion characteristic functions $\gamma_2$ and $\gamma_3$ has a characteristic in which, when an image data value has the highest density value, the conversion print data $D_a$ which is substantially the same as the image data value is outputted, and in which, when it is lower than the highest density value, conversion print data which is substantially zero is outputted.

The image data $D_{11}$ in the sampled region $S_1$ in this embodiment is converted into conversion print data that is linearly proportional to the image data $D_{11}$ by the conversion characteristic function $\gamma_1$ of the $\gamma$ conversion unit 47, while the image data $D_{12}$ is converted into conversion print data resulting in a density $D_a$ only if the density assumes the highest value, otherwise it is converted into conversion print data resulting in a density of substantially zero by the conversion characteristic function $\gamma_2$. Further, the image data $D_{21}$ is converted into conversion print data resulting in density $D_a$ only if the density assumes the highest value in the same manner as the image data $D_{12}$, and otherwise it is converted into conversion print data resulting in a density of substantially zero. The image data $D_{22}$ is converted into a substantially linearly proportional conversion print data so that its highest density becomes $D_a$. As a result, the image data $D_{12}$, $D_{22}$ are virtually excluded.

When the two line-long image data have been converted into print data, the microcomputer 17 outputs the print data stored in the print buffer 46 to the printhead drive circuit 23 through the interface 22. Accordingly, as described above, alternate heating resistor elements of the printhead 6 are operated with the conversion output indicated by the conversion characteristic function $\gamma_1$ with respect to the first line. As a result, the density corresponding to each image data can be reproduced accurately while receiving sufficiently high electric energy even for high density dot data. Further, image data of the highest density are converted into conversion print data $D_a$ by the conversion characteristic functions $\gamma_1$ and $\gamma_4$, and into conversion print data $D_a$ by the conversion characteristic functions $\gamma_2$ and $\gamma_3$, thereby forming contiguous dots and reproducing the pattern with high density and high resolution.

Upon completion of printing the first line, the microcomputer 17 drives the pulse motor to forward the recording sheet 1 and the ink sheet 9 a single line, and then delivers second line data stored in the print buffer 46 to the printhead drive circuit 23 to start printing. In the second line printing, since the conversion characteristic function $\gamma_3$ is set to the image data $D_{21}$ in the sampled region $S_{21}$, such data is virtually excluded unless its density is the highest value. Also, since the image data $D_{22}$ is set to the conversion characteristic function $\gamma_4$, it is printed at a density that is proportional to the electric energy thereby supplied. Accordingly, the dot $D_{22}$ printed in the second line is printed at a position shifted obliquely with respect to the dot $D_{11}$ printed in the first line. Thus, the heating resistor element corresponding to the image data $D_{22}$ can be driven to its full capacity to form the dot. Further, for an extremely high density image region (*e.g.*, all the dots in the sampling region S are of the highest density) all the sampled image data are to be printed, so that the conversion print data $D_a$ is outputted to allow their tones and average density to be accurately reproduced.

Upon completion of printing the two lines, the next two lines of data (*i.e.*, the image data of the third and fourth lines) are read from the image memory 40, subjected to a $\gamma$ conversion process after sampling them on a 2 × 2 pixel basis as described previously, and applied to the print buffer 46, and printing is performed thereafter.

In this embodiment, since the conversion characteristic function $\gamma_1$ becomes prevalent in the majority of regions with the conversion characteristic function $\gamma_4$ serving as an auxiliary, many of the pixels of the average image data assumes the characteristic given by the conversion characteristic function $\gamma_1$ among dots in the 2 × 2 sampling regions, thus making the number of pixels to be substantially 1/2 to 2/4. It is noted that, as described above, the conversion characteristic function $\gamma_1$ supplies electric energy about three times the normal driving energy to the heating resistor elements, thereby allowing the ink on the ink ribbon to be melted surely and providing the advantage that it is hard to be affected by variations in conditions such as the quality of recording sheets. Further, since there are many image data such as characters which demand high resolution printing for the highest density portion, it is arranged so that all the pixels in a 2 × 2 sampling region are printed at the density $D_a$ that is the same as the image data.

Fig. 22 shows an embodiment in which the highest conversion print data is set to $D_d$, having a density which is lower than in the previous embodiment, for the conversion characteristic function $\gamma_1$, and the supplied electric energy is set to $D_c$, which is higher than $D_a$, for the maximum conversion print data for the conversion characteristic function $\gamma_4$. According to this embodiment, the pixels are formed by the conversion characteristic functions $\gamma_1$, and $\gamma_4$ in the majority of the regions, thereby allowing higher resolution printing to be performed than in the previous embodiments.

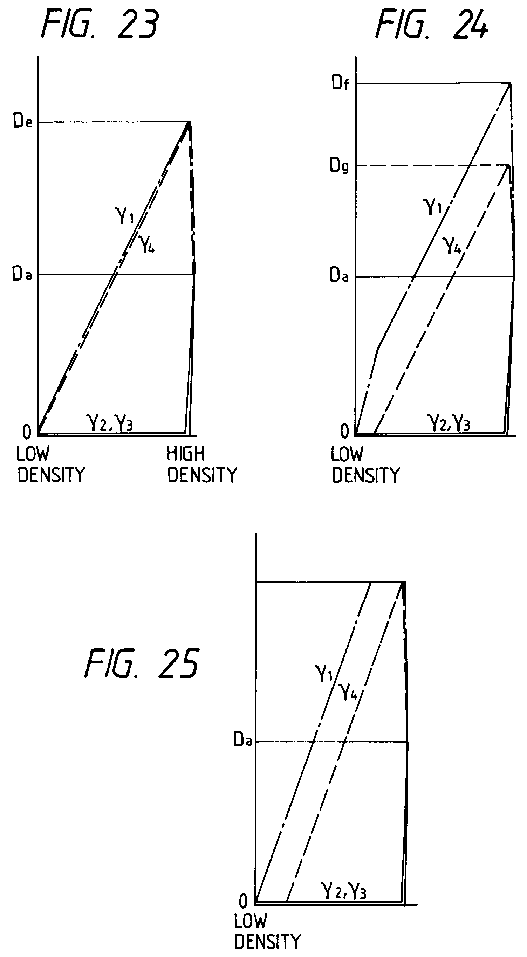

A $\gamma$ conversion characteristic shown in Fig. 23 decreases the highest conversion print data to De, which is lower than in the above embodiment, while the conversion characteristic functions $\gamma_1$ and $\gamma_4$ are characterized to provide the dot size at the same rate and the conversion characteristic functions $\gamma_2$ and $\gamma_3$ are characterized so as to output the conversion print data $D_a$ only when the image data indicates the highest value. Therefore, according to this embodiment, dots are formed by the conversion characteristic functions $\gamma_1$ and $\gamma_4$ in the majority of the regions, resulting in about half of the image data being subjected to printing. Thus, with the use of recording sheets having excellent transfer characteristics, the resolution can further be improved.

A $\gamma$ conversion characteristic indicated in Fig. 24 prints only the conversion characteristic function $\gamma_1$ which is set to conversion print data $D_f$ (i.e., one pixel out of the 2 × 2 pixels in a sampling region with a steep rise). If image data whose density is higher than the above is inputted, then the printing is performed, taking into consideration the conversion characteristic function $\gamma_4$ in which the highest dot size $D_h$ is set. According to this embodiment, since the characteristic with which a large dot size compared to the density of image data in the low density region is set by the conversion characteristic function $\gamma_1$, stable transfer characteristics can be exhibited.

A conversion characteristic function $\gamma$ indicated in Fig. 25 prints only one dot when the density of image data is low. However, since the proportional coefficients of the image data and the conversion print data in the low density region are set to values smaller than the $\gamma$ conversion characteristic shown in Fig. 24, the tone characteristic in the low and high density regions are improved, while the tone characteristic is accurate with respect to the density of the image in half tone regions.

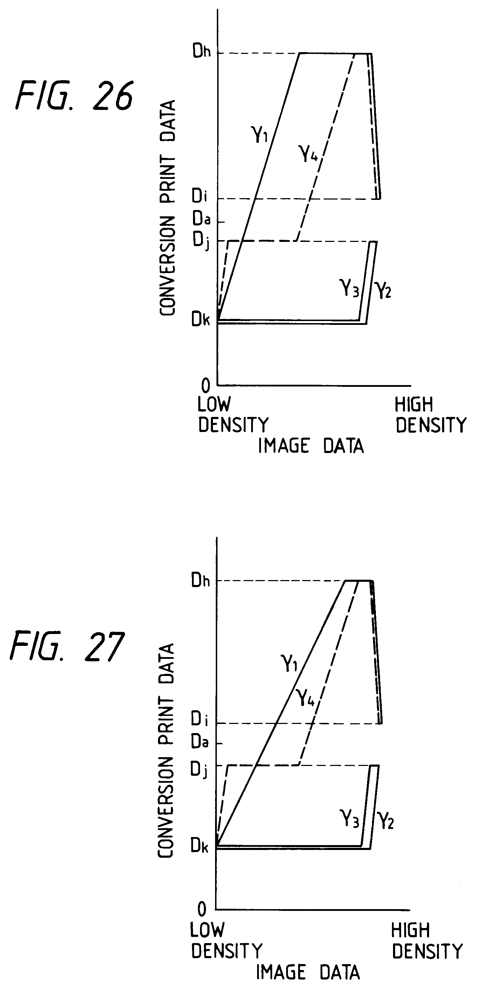

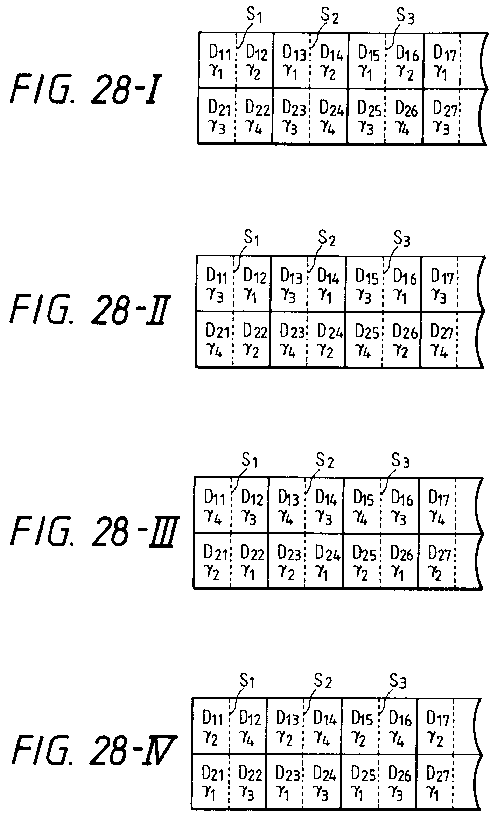

Fig. 26 shows another exemplary conversion characteristic function $\gamma$ set in the $\gamma$ conversion unit 47. The conversion characteristic function $\gamma_1$ exhibits such a substantially linear characteristic as to provide a minimum conversion print data $D_k$ which is so small that no dot is transferred at an initial stage with respect to an image data value, and a maximum conversion print data $D_h$ that is sufficiently high supplied electric energy with respect to image data in the medium density region, with the conversion print data $D_h$ being maintained at a region between the medium density region and the high density region, so that conversion print data $D_i$ that is close to the image data can be obtained at the highest density region.

The conversion characteristic function $\gamma_2$ has such a characteristic as not only to provide the conversion print data $D_k$ that is so small as to not form a transfer dot in almost all the regions, but also to provide conversion print data $D_j$ which is close to the image data in the vicinity of the highest density value.

The conversion characteristic function $\gamma_3$ exhibits such a characteristic as not only to provide the conversion print data $D_k$ that is so small as to not form a transfer dot in almost all the regions that the conversion characteristic function $\gamma_2$ does, but also to provide the conversion print data $D_j$ that is close to the image data or data approximated to $D_j$ in the highest density region as well as in its vicinity.

The conversion characteristic function $\gamma_4$ has such a substantially linear characteristic so as to provide a minimum conversion print data $D_k$ which does not form a transfer dot in the low density region of the image data at an initial stage. The density of the image data rises steeply to the conversion print data $D_j$ which can form a sufficient transfer dot and maintains such a value to the medium density region thereafter. The highest print data $D_h$ is provided over a range between the medium density region and the high density region, and a conversion print data $D_i$ is provided that is close to the density of the image data in the highest density region.

According to this embodiment, sufficiently high electric energy is supplied to the image data by the conversion characteristic function $\gamma_4$ at the initial stage of printing, thereby allowing a relatively large, stable transfer dot to be formed, and transfer dots to be formed by the conversion characteristic function $\gamma_1$ over the medium region allow the density to increase gradually. The density of the transfer dots is further gradually increased toward the high density region by the conversion characteristic function $\gamma_4$. In the vicinity of the highest density region, the density is increased in combination with dots formed by the conversion characteristic function $\gamma_3$. In the highest density region, the conversion print data $D_i$ derived from the conversion characteristic functions $\gamma_1$ and $\gamma_4$ is added, while the conversion data $D_j$ derived from the conversion characteristic functions $\gamma_2$ and $\gamma_3$ are added to form transfer dots. Accordingly, the transfer dots can be formed stably at all times in all the regions.

Since the conversion characteristic functions $\gamma_1$, $\gamma_2$, $\gamma_3$, $\gamma_4$ having different conversion print data are applied to the same image data, interference between heating resistor elements forming the neighboring dots can be reduced, thereby contributing to forming the transfer dots which accurately express tones with respect to the inputted print data.

As shown in Fig. 27, by setting a single con-

version characteristic function $\gamma_1$ so that conversion print data increases gradually with respect to the density of the image data, the tone expression in the medium density region can selectively be improved.

While the seven representative conversion characteristic functions $\gamma$ have been described above, it is obvious that the best print result can be obtained by selecting the $\gamma$ characteristic in accordance with the object to be printed. That is, if emphasis is given to higher tones, one conversion characteristic function $\gamma_1$ may be set so that a steep characteristic is provided and another conversion characteristic function $\gamma_4$ may be set so that a smaller slope is provided. If emphasis is given to high resolution, the conversion characteristic function $\gamma_4$ may be arranged close to the conversion characteristic function $\gamma_1$, or the conversion characteristic function $\gamma_2$ or $\gamma_3$ may be set to exhibit a smooth characteristic. Further, by setting such conversion print data as to provide heating resistor elements with such supplied electric energy as to not form a transfer dot even in the absence of image data, the thermal stability of the heating resistor elements is ensured during printing, which in turn enables transfer dots to be formed stably.

Further, if such conversion print data which results in the supply of electric energy sufficiently higher than the image data is given to either one of the conversion characteristic functions $\gamma$ in the low density region of the image data, low density transfer dots, which tends to be defective, can be formed with a stable tone expression.

That is, the best tone characteristic can be obtained by appropriately selecting the magnitude of a maximum and a minimum as well as the slope to be set to the conversion print data in accordance with the image to be printed or with the type of a sheet serving as a print medium.

Printing with a single color has been described in the above embodiments for purposes of explanation. If these embodiments are applied to full-color printing using inks of yellow, magenta, cyan, and black, the conversion characteristic functions $\gamma_1$, $\gamma_2$, $\gamma_3$, $\gamma_4$ are distributed differently on a color basis to a plurality of print data $D_{nm}$, which are sampled as print data, as shown in Figs. 28-I, 28-II, 28-III, and 28-IV. More specifically, a distribution of the conversion characteristic functions $\gamma_1$, $\gamma_2$, $\gamma_3$, $\gamma_4$ as shown in Fig. 28-I for yellow, a distribution of the conversion characteristic functions $\gamma_1$, $\gamma_2$, $\gamma_3$, $\gamma_4$ as shown in Fig. 28-II for magenta, a distribution of the conversion characteristic functions $\gamma_1$, $\gamma_2$, $\gamma_3$, $\gamma_4$ as shown in Fig. 28-III for cyan, and a distribution of the conversion characteristic functions $\gamma_1$, $\gamma_2$, $\gamma_3$, $\gamma_4$ as shown in Fig. 28-IV for black are set. As a result, the same effect as the net point technique in the normal color printing can be obtained, with clear reproduction of colors.

That is, if N-digit-long data (N is an integer greater than 1) are sampled in the main scanning direction from the image data stored in the line buffer 32 (*i.e.*, N × N dots, or the regions $S_1$, $S_2$, $S_3$, $S_4$, each consisting of 2 × 2 pixels) then the data position to which each conversion characteristic is assigned is differentiated per ink color, in such a manner that, with respect to the data $D_{11}$, $D_{12}$, $S_{21}$, $S_{22}$ forming the region $S_1$, for yellow, the conversion characteristic function $\gamma_1$ is set to the data $D_{11}$, the conversion characteristic function $\gamma_2$ to the data $D_{12}$, the conversion characteristic function $\gamma_3$ to the data $D_{21}$, the conversion characteristic function $\gamma_4$ to the data $D_{22}$, for magenta, the conversion characteristic function $\gamma_3$ is set to the data $D_{11}$, the conversion characteristic function $\gamma_1$ to the data $D_{12}$, the conversion characteristic function $\gamma_4$ to the data $D_{21}$, and the conversion characteristic function $\gamma_2$ to the data $D_{22}$, and so on. Accordingly, overlapping of dots formed by different color inks can be prevented and clear color prints can thereby be produced.

While the case where the sampling region is set to 2 × 2 dots has been described in this embodiment, it is obvious that the sampling region can take any arbitrary size.

As described above, the invention provides a printhead having a plurality of heating resistor elements arranged in a row, means for forwarding a recording sheet and an ink sheet at a predetermined pitch; means for extracting image data forming inputted image data at a certain interval, and means for supplying the heating resistor elements of the printhead with electric energy corresponding to a density specified by the image data so as to correspond to the extracting interval. Therefore, the image data is extracted at an interval amounting at least to a single pixel out of the image data fed from an external device in the main scanning direction so as to prevent thermal interference with the neighboring heating resistor elements. Accordingly, the heating resistor elements are operated accurately by with respect to such electric energy as to form a dot larger than the dot size specified by the highest density of the inputted image data. As a result, density can be expressed in more gradations than with the conventional apparatus. This permits sufficient tone expression and color reproduction even if the area of a sampling region is reduced, hence reducing the dither processing steps to thereby decrease image data processing time and preventing generation of texture noise.

**Claims**

1. A thermal transfer image forming apparatus,

comprising:

a printhead (6) having a plurality of heating resistor elements (14) arranged in a row;

means (3,8,10,11) for forwarding a recording sheet (1) and an ink sheet (9) at a predetermined pitch to said printhead (6);

means (28) for extracting pixel data constituting inputted image data at a specific interval; and

means (23) for supplying said plurality of elements (14) of said printhead (6) with electric energy corresponding to a density regulated by said pixel data so as to correspond to said interval.

2.    A thermal transfer image forming apparatus according to claim 1, further comprising tone determining means for distributing pixel data excluded by said extracting means to extracted image data.

3.    A thermal transfer image forming apparatus according to claim 1 or 2 wherein said extracting means (28) extracts pixel data at a digit that is different at least from said last extracted digit.

4.    A thermal transfer image forming apparatus comprising:

a printhead (6) having a plurality of heating resistor elements (14) arranged in a row;

means (3,8;10,11) for forwarding a recording sheet (1) and an ink sheet (9) at a predetermined pitch to said printhead (6);

means (34) for extracting pixel data constituting inputted image data continuously for a plurality of lines;

means (33) for sampling said image data for a plurality of lines in dot matrix form;

means (35) for extracting image data exceeding a reference density by comparing said reference density specified in dot matrix form with said sampled data; and

means (23) for supplying a heating resistor element (14) of said printhead (6) with electric energy corresponding to said density of said extracted image data.

5.    A thermal transfer image forming apparatus comprising:

a printhead (6) having a plurality of heating resistor elements (14) arranged in a row;

means (3,8;10,11) for forwarding a recording sheet (1) and an ink sheet (9) at a predetermined pitch to said printhead (6);

means for extracting pixel data constituting inputted image data continuously for a plurality of lines;

means (43) for sampling said image data for a plurality of lines in dot matrix form;

tone determining means (44) for extracting image data exceeding a reference density by comparing said reference density specified in dot matrix form with said sampled data and distributing a density of image data falling below said reference density to said extracted image data; and

means (23) for supplying a heating resistor element (14) of said printhead (6) with electric energy corresponding to a tone-determined density of said extracted image data.

6.    A thermal transfer image forming apparatus comprising:

a printhead (6) having a plurality of heating resistor elements (14) arranged in a row;

means (3,8;10,11) for forwarding a recording sheet (1) and an ink sheet (9) at a predetermined pitch to said printhead (6);

means for extracting pixel data constituting inputted image data continuously for a plurality of lines;

means (42) for sampling said image data for a plurality of lines in dot matrix form;

$\gamma$ conversion means (47) for subjecting each of N x M (M and N being integers greater than 1) dots to a $\gamma$ conversion process and thereby outputting print data; and

means (23) for supplying a heating resistor element (14) of said printhead (6) with electric energy corresponding to said print data.

7.    A thermal transfer image forming apparatus according to claim 6, wherein said $\gamma$ conver-

sion means (47) includes a plurality of conversion characteristic functions for each dot in said sampling region.

8. A thermal transfer image forming apparatus according to claim 6, wherein said $\gamma$ conversion means (47) includes such a conversion characteristic function such as to output density data that is substantially in proportion to a density of binary characteristic at least with respect to one of said sampled image data.

9. A thermal transfer image forming apparatus according to claim 6, wherein said $\gamma$ conversion means (47) includes such a conversion characteristic function such as to output density data forming a dot expressing a density higher than a density regulated by image data at least with respect to one of said sampled image data.

10. A thermal transfer image forming apparatus according to claim 6, wherein said $\gamma$ conversion means (47) includes such a conversion characteristic function such as to output data for forming a transfer dot whose size is substantially different in a medium density region.

11. A thermal transfer image forming apparatus according to claim 6, wherein said $\gamma$ conversion means (47) includes such a conversion characteristic function such as to output density data that is substantially the same as image data in the highest density region.

12. A thermal transfer image forming apparatus according to claim 6, wherein said $\gamma$ conversion means (47) includes such a conversion characteristic function such as to output density data that is different from image data in the highest density region.

13. A thermal transfer image forming apparatus according to claim 6, wherein said $\gamma$ conversion means (47) includes such a conversion characteristic function such as to output, from a low density region with respect to at least one of said sampled image data, density data that is substantially the same as a maximum value specified by said image data.

14. A thermal transfer image forming apparatus according to claim 6, wherein said $\gamma$ conversion means (47) has a conversion characteristic function whose minimum value is such a value as to form no transfer dot.

15. A thermal transfer image forming apparatus according to claim 6, wherein said $\gamma$ conversion means (47) distributes conversion characteristic functions to a plurality of image data to be printed to on a color basis, said conversion characteristic functions being different from one another.

# FIG. 1

# FIG. 2

FIG. 3

FIG. 4

# FIG. 5

# FIG. 6-I

| D$_1$ | D$_2$ | D$_3$ | D$_4$ | D$_5$ | D$_6$ | D$_7$ | D$_8$ | D$_9$ | D$_{10}$ | D$_{11}$ |
|---|---|---|---|---|---|---|---|---|---|---|

# FIG. 6-I'

| D$_1$ | | D$_3$ | | D$_5$ | | D$_7$ | | D$_9$ | | D$_{11}$ |
|---|---|---|---|---|---|---|---|---|---|---|

# FIG. 6-II

| D$_1$ | D$_2$ | D$_3$ | D$_4$ | D$_5$ | D$_6$ | D$_7$ | D$_8$ | D$_9$ | D$_{10}$ | D$_{11}$ |
|---|---|---|---|---|---|---|---|---|---|---|

# FIG. 6-II'

| | D$_2$ | | D$_4$ | | D$_6$ | | D$_8$ | | D$_{10}$ | |
|---|---|---|---|---|---|---|---|---|---|---|

# FIG. 7 (a)

# FIG. 7 (b)

# FIG. 8

RELATIVE DOT SIZE

RELATIVE INPUT ENERGY

# FIG. 9

MAIN SCANNING
DIRECTION

AUXILIARY
SCANNING
DIRECTION

# FIG. 11

MAIN SCANNING
DIRECTION

AUXILIARY
SCANNING
DIRECTION

FIG. 10 (a)-I

FIG. 10 (b)-I

FIG. 10 (a)-II

FIG. 10 (b)-II

FIG. 10 (a)-III

FIG. 10 (b)-III

## FIG. 12

```
  30              31              32
┌─────────┐  ┌─────────────┐  ┌─────────┐
│ IMAGE   │  │ IMAGE DATA  │  │ LINE    │
│ MEMORY  │─→│ READING     │─→│ BUFFER  │
│         │  │ MEANS       │  │         │
└─────────┘  └─────────────┘  └────┬────┘
                                   ↕
        33              34              36
   ┌─────────┐  ┌─────────────┐  ┌─────────┐
   │ SAMPLING│  │ PIXEL       │  │ PRINT   │
   │ MEANS   │─→│ EXTRACTING  │─→│ BUFFER  │
   │         │  │ MEANS       │  │         │
   └─────────┘  └──────┬──────┘  └─────────┘
                       ↕
                       35
              ┌─────────────────┐
              │ EVALUATION DATA │
              │ STORAGE MEANS   │
              └─────────────────┘
```

## FIG. 13

| | $S_1$ | | $S_2$ | | $S_3$ | | $S_4$ | |
|---|---|---|---|---|---|---|---|---|
| $D_{11}$ | $D_{12}$ | $D_{13}$ | $D_{14}$ | $D_{15}$ | $D_{16}$ | $D_{17}$ | $D_{18}$ | $D_{19}$ |
| $D_{21}$ | $D_{22}$ | $D_{23}$ | $D_{24}$ | $D_{25}$ | $D_{26}$ | $D_{27}$ | $D_{28}$ | $D_{29}$ |

## FIG. 14(a)

| $L_1$ | $L_2$ |
|---|---|
| $L_3$ | $L_4$ |

## FIG. 14(b)

| 0 | 11 |
|---|---|
| 10 | 2 |

FIG. 15

| $D_{11}$ 2 | $D_{12}$ 2 | $D_{13}$ 12 | $D_{14}$ 11 | $D_{15}$ 2 | $D_{16}$ 6 | $D_{17}$ 6 | $D_{18}$ 7 | $D_{19}$ 5 | |
|---|---|---|---|---|---|---|---|---|---|
| $D_{21}$ 2 | $D_{22}$ 2 | $D_{23}$ 9 | $D_{24}$ 3 | $D_{25}$ 11 | $D_{26}$ 7 | $D_{27}$ 5 | $D_{28}$ 5 | $D_{29}$ 6 | |

FIG. 16

| $D_{11}$ | | $D_{13}$ | | $D_{15}$ | | $D_{17}$ | | $D_{19}$ | |
|---|---|---|---|---|---|---|---|---|---|
| | | | $D_{24}$ | $D_{25}$ | $D_{26}$ | | $D_{28}$ | | |

FIG. 17

FIG. 18

| $D_{11}$ 8 | | $D_{13}$ 22 | | $D_{15}$ 4 | | $D_{17}$ 12 | | $D_{19}$ | |
|---|---|---|---|---|---|---|---|---|---|
| | | | $D_{24}$ 13 | $D_{25}$ 13 | $D_{26}$ 9 | | $D_{28}$ 11 | | |

# FIG. 19

```
        40              41           42
 ┌────────┐  ┌──────────────┐  ┌────────┐
 │ IMAGE  │  │ IMAGE DATA   │  │ LINE   │
 │ MEMORY │→ │ READING MEANS│→ │ BUFFER │
 └────────┘  └──────────────┘  └────────┘
                                    │
                                    ↓
                          43           47           46
                  ┌──────────┐  ┌─────────────┐  ┌────────┐
                  │ SAMPLING │  │ γ CONVERSION│  │ PRINT  │
                  │ MEANS    │→ │ MEANS       │→ │ BUFFER │
                  └──────────┘  └─────────────┘  └────────┘
```

# FIG. 20

| $S_1$ | | $S_2$ | | $S_3$ | | |
|---|---|---|---|---|---|---|
| $D_{11}$ $\gamma_1$ | $D_{12}$ $\gamma_2$ | $D_{13}$ $\gamma_1$ | $D_{14}$ $\gamma_2$ | $D_{15}$ $\gamma_1$ | $D_{16}$ $\gamma_2$ | $D_{17}$ $\gamma_1$ |
| $D_{21}$ $\gamma_3$ | $D_{22}$ $\gamma_4$ | $D_{23}$ $\gamma_3$ | $D_{24}$ $\gamma_4$ | $D_{25}$ $\gamma_3$ | $D_{26}$ $\gamma_4$ | $D_{27}$ $\gamma_3$ |

# FIG. 21

D b

γ₁

D a

γ₄

γ₂, γ₃

0

LOW
DENSITY

HIGH
DENSITY

# FIG. 22

D d

γ₁

D c

D a

γ₄

γ₂, γ₃

0

LOW
DENSITY

HIGH
DENSITY

## FIG. 23

LOW
DENSITY

HIGH
DENSITY

## FIG. 24

LOW
DENSITY

## FIG. 25

LOW
DENSITY

FIG. 26

FIG. 27

FIG. 28-I

| | S₁ | | S₂ | | S₃ | |
|---|---|---|---|---|---|---|
| $D_{11}$ $\gamma_1$ | $D_{12}$ $\gamma_2$ | $D_{13}$ $\gamma_1$ | $D_{14}$ $\gamma_2$ | $D_{15}$ $\gamma_1$ | $D_{16}$ $\gamma_2$ | $D_{17}$ $\gamma_1$ |
| $D_{21}$ $\gamma_3$ | $D_{22}$ $\gamma_4$ | $D_{23}$ $\gamma_3$ | $D_{24}$ $\gamma_4$ | $D_{25}$ $\gamma_3$ | $D_{26}$ $\gamma_4$ | $D_{27}$ $\gamma_3$ |

FIG. 28-II

| | S₁ | | S₂ | | S₃ | |
|---|---|---|---|---|---|---|
| $D_{11}$ $\gamma_3$ | $D_{12}$ $\gamma_1$ | $D_{13}$ $\gamma_3$ | $D_{14}$ $\gamma_1$ | $D_{15}$ $\gamma_3$ | $D_{16}$ $\gamma_1$ | $D_{17}$ $\gamma_3$ |
| $D_{21}$ $\gamma_4$ | $D_{22}$ $\gamma_2$ | $D_{23}$ $\gamma_4$ | $D_{24}$ $\gamma_2$ | $D_{25}$ $\gamma_4$ | $D_{26}$ $\gamma_2$ | $D_{27}$ $\gamma_4$ |

FIG. 28-III

| | S₁ | | S₂ | | S₃ | |
|---|---|---|---|---|---|---|
| $D_{11}$ $\gamma_4$ | $D_{12}$ $\gamma_3$ | $D_{13}$ $\gamma_4$ | $D_{14}$ $\gamma_3$ | $D_{15}$ $\gamma_4$ | $D_{16}$ $\gamma_3$ | $D_{17}$ $\gamma_4$ |
| $D_{21}$ $\gamma_2$ | $D_{22}$ $\gamma_1$ | $D_{23}$ $\gamma_2$ | $D_{24}$ $\gamma_1$ | $D_{25}$ $\gamma_2$ | $D_{26}$ $\gamma_1$ | $D_{27}$ $\gamma_2$ |

FIG. 28-IV

| | S₁ | | S₂ | | S₃ | |
|---|---|---|---|---|---|---|
| $D_{11}$ $\gamma_2$ | $D_{12}$ $\gamma_4$ | $D_{13}$ $\gamma_2$ | $D_{14}$ $\gamma_4$ | $D_{15}$ $\gamma_2$ | $D_{16}$ $\gamma_4$ | $D_{17}$ $\gamma_2$ |
| $D_{21}$ $\gamma_1$ | $D_{22}$ $\gamma_3$ | $D_{23}$ $\gamma_1$ | $D_{24}$ $\gamma_3$ | $D_{25}$ $\gamma_1$ | $D_{26}$ $\gamma_3$ | $D_{27}$ $\gamma_1$ |